# EUROPÄISCHE PATENTSCHRIFT

(11) **EP 0 799 322 B1**
(45) Veröffentlichungstag und Bekanntmachung des Hinweises auf die Patenterteilung: **28.02.2001**
(21) Anmeldenummer: 96933254.3
(22) Anmeldetag: 08.10.1996
(51) Int. Cl.: C21B 13/00

(54) **VERFAHREN ZUR DIREKTREDUKTION VON TEILCHENFÖRMIGEM EISENOXIDHÄLTIGEM MATERIAL UND ANLAGE ZUR DURCHFÜHRUNG DES VERFAHRENS**
METHOD OF DIRECTLY REDUCING A PARTICULATE IRON OXIDE-CONTAINING MATERIAL AND PLANT FOR CARRYING OUT THE METHOD
PROCEDE DE REDUCTION DIRECTE DE MATERIAU PARTICULAIRE RENFERMANT DE L'OXYDE DE FER ET INSTALLATION POUR LA MISE EN OEUVRE DUDIT PROCEDE

(30) Priorität: 10.10.1995 AT 168295
(43) Veröffentlichungstag der Anmeldung: 08.10.1997
(73) Patentinhaber: VOEST-ALPINE INDUSTRIEANLAGENBAU GMBH, 4020 Linz (AT); Brifer International Ltd., Bridgetown, Barbados (BB)
(72) Erfinder: KEPPLINGER, Leopold, Werner, A-4060 Leonding (AT); WALLNER, Felix, A-4020 Linz (AT); SCHENK, Johannes-Leopold, A-4040 Linz (AT); WHIPP, Roy, Hubert, Jr., Windermere, FL 34786 (US)
(74) Vertreter: Kopecky, Helmut, Dipl.-Ing. Kopecky & Schwarz Patentanwälte
(86) Internationale Anmeldenummer: AT9600189
(87) Internationale Veröffentlichungsnummer: WO9713878

(56) Entgegenhaltungen:
- EP-A- 0 571 358
- DE-A- 2 651 309
- DE-B- 1 163 353
- US-A- 3 475 160
- US-A- 5 082 251
- US-A- 5 370 727

## Beschreibung

Die Erfindung betrifft ein Verfahren zur Direktreduktion von teilchenförmigem eisenoxidhältigem Material im Wirbelschichtverfahren, wobei das eisenoxidhältige Material mit Hilfe eines Reduktionsgases in mindestens einer Vor-Reduktionsstufe vorreduziert und anschließend in einer End-Reduktionsstufe zu Eisenschwamm reduziert wird, und wobei Reduktionsgas zum Teil aus frisch zugeführtem Reduktionsgas und aus bei der Direktreduktion des eisenhältigen Materials entstehendem Topgas gebildet wird und in die End-Reduktionsstufe eingeleitet, dort umgesetzt, abgezogen, anschließend zu einem Teil in mindestens eine Vor-Reduktionsstufe eingeleitet, dort umgesetzt, abgezogen, einer Wäsche unterworfen und anschließend als Topgas abgeleitet wird, und zum anderen Teil abgezweigt, gewaschen, von CO₂ gereinigt sowie erhitzt wird und anschließend ebenfalls als Reduktionsgas verwendet wird, sowie eine Anlage zur Durchführung des Verfahrens.

Ein Verfahren zur Direktreduktion von Eisenerz ist aus der US-A - 5,082,251 bekannt. Hierbei wird zwecks möglichst weitgehender Ausnützung des Reduktionspotentials und der Wärmeenergie des Reduktionsgases das Reduktionsgas durch sämtliche Reduktionsstufen geleitet, von der in Fließrichtung des eisenoxidhältigen Materials ersten Reduktionsstufe als Topgas abgezogen und anschließend gewaschen. Ein Teil des Topgases wird verdichtet, erhitzt und dann als Recycle-Reduktionsgas dem Reduktionsprozeß zugeführt, wodurch eine Ausnutzung der noch im Topgas vorhandenen Reduktanten erzielt werden kann. Nachteilig ist hierbei jedoch, daß sämtliche Wirbelschicht-Reduktionsstufen für einen Betrieb mit der Gesamtgasmenge, d.h. frisch erzeugtem Reduktionsgas und Recycle-Reduktionsgas. ausgelegt werden müssen.

Bei der Reduktion von Eisenoxiden im Wirbelschichtverfahren durch CO/CO₂-Gemische kommt es bei höheren Temperaturen (z.B. höher als 700°C) und niedrigem Reduktionspotential (d.h. bei erhöhtem CO₂- und H₂O-Gehalt im Reduktionsgas) zu gerichteten, nadeligen Eisenausscheidungen an der Oberfläche der Feinerzpartikel. Diese Eisenausscheidungen bilden die Ursache für das Phänomen "sticking" in Wirbelschichten. Bei sehr hohen Reduktionsgraden kommt es zu einem Zusammenkleben des Erzes, wodurch der Reduktionsprozeß behindert ist. Wenn jedoch die Reduktion bei sehr hohem bzw. höchstem Reduktionspotential des Reduktionsgases abläuft, erfolgt eine dichte oder poröse Eisenausscheidung, bei der kein "sticking" zu beobachten ist.

Ein Verfahren der eingangs beschriebenen Art ist aus der DE-C - 1 163 353 bekannt. Hierbei wird das Eisenerz in einer Primärstufe und einer Sekundärstufe zu metallischem Eisen reduziert, wobei das Abgas (Topgas) aus der Primärstufe regeneriert und in den Kreislauf rückgeführt wird. Das Regenerieren erfolgt unter Entfernen der Oxidationsprodukte H₂O und/oder CO₂, was eine Konzentrationszunahme der für die Reduktion inerten Stoffe, z.B. von Stickstoff, bewirkt. Zu diesem Zweck wird ein Teil des regenerierten Gases abgeleitet, um das Absteigen des Gehalts an inerten Stoffen zu begrenzen. Das aus der Sekundärstufe entweichende Abgas besitzt noch ein ausreichendes Reduktionsvermögen zur Verwendung in der Primärstufe, in die es eingeleitet wird.

Gemäß der DE-C - 1 163 353 werden die Abgasgeschwindigkeiten aus den beiden Stufen dadurch einander angeglichen, daß 4 bis 30 % des die Sekundärstufe verlassenden Abgases zwischen der Sekundär- und der Primärstufe abgezweigt und im Kreislauf zur Sekundärstufe rückgeführt werden. Dies dient zur Absenkung der Abgasgeschwindigkeit des Abgases aus der Primärstufe, so daß diese Abgasgeschwindigkeit der Abgasgeschwindigkeit der aus der Sekundärstufe entweichenden Gase entspricht. Hierdurch wird der allgemeine Wirkungsgrad erhöht und die mitgeführte Staubmenge herabgesetzt.

Nachteilig ist hierbei, daß sowohl das frische Reduktionsgas, das dem System zugeführt wird, um das angereicherte abgeleitete Abgas zu ersetzen, und das Topgas als auch das zwischen der Primär- und Sekundärstufe abgeleitete Reduktionsgas jeweils für sich chemisch aufbereitet werden. Die zu regenerierende Gasmenge ist sehr groß, da das aus dem System auszuschleusende Abgas mit erhöhten inerten Bestandteilen erst nach der Regenerierung ausgeschleust wird. Zudem ist der Aufwand für mindestens zwei Regeneratoren nach dem Stand der Technik für zwei Gasströme bzw. ein gemeinsamer Regenerator für diese beiden Gasströme aus den Reduktionsstufen und eine Gasbehandlungsanlage für das frische Reduktionsgas aufwendig und schwierig regelbar. Die Einstellung einer bestimmten chemischen Zusammensetzung des Reduktionsgases ist mit einem großen Aufwand verbunden.

Die Erfindung bezweckt die Vermeidung dieser Nachteile und Schwierigkeiten und stellt sich die Aufgabe, ein Verfahren und eine Anlage zur Durchführung des Verfahrens zu schaffen, welche eine Reduktion ohne das Auftreten von "sticking" sicherstellen, u.zw. durch eine Erhöhung des Reduktionspotentials des Reduktionsgases, wobei jedoch die zur Erzeugung des Reduktionsgases eingesetzte Menge an Kohlenwasserstoffträgern, also die Menge des zu reformierenden Gases, nicht erhöht werden soll; es soll sich vielmehr eine Einsparung an Kohlenwasserstoffträgern gegenüber dem Stand der Technik erzielen lassen. Insbesondere soll erfindungsgemäß eine leichte Regelbarkeit bzw. Einstellbarkeit der chemischen Zusammensetzung des Reduktionsgases gegeben sein, wobei die Einrichtung zur Einstellung der chemischen Zusammensetzung des Reduktionsgases möglichst geringe Investitionskosten erfordern soll und auch billig im Betrieb sein soll.

Diese Aufgabe wird erfindungsgemäß dadurch gelöst, daß frisches Reduktionsgas von Synthesegas, wie reformiertem Erdgas, gebildet wird und das gesamte der End-Reduktionsstufe zugeführte Reduktionsgas in einer einzigen Gasaufbereitungsstufe von CO₂ befreit und hinsichtlich seiner chemischen Zusammensetzung konditioniert wird sowie anschließend erhitzt wird.

Die Konditionierung der chemischen Zusammensetzung erfolgt in der Gasaufbereitungsstufe für das frische Reduktionsgas, Topgas sowie das nach der Endreduktionsstufe abgezweigte Reduktionsgas durch die folgenden Prozeßschritte:
Die CO₂-Eliminierung erfolgt mit den bekannten physikalischen und chemischen Verfahren Die Einstellung des CO/H₂-Verhältnisses erfolgt über eine Shift-Konvertierung nach der Wasser-Gas Shift Reaktion CO + H₂O ↔ CO₂ + H₂. In der technischen Ausführung erfolgt zuerst eine Shift-Konvertierung entsprechend den thermodynamischen Bedingungen für das gewünschte CO/H₂-Verhältnis in einem Shift-Reaktor. Für die Shift-Konvertierung von CO zu H₂ wird Wasserdampf eingesetzt, der Überschußdampf wird nach der Konvertierung auskondensiert. Das entstehende CO₂ wird in einer nachgeschalteten CO₂-Wäsche eliminiert. Eine Entfernung von H₂S erfolgt normalerweise gemeinsam mit der CO₂-Wäsche. Eine Einstellung des H₂O-Gehaltes kann in einem separaten Prozeßschritt einer Gasbefeuchtung (Kondensator, Quenchkühler) erfolgen. Diese ist nach einer CO₂-Wäsche anzuordnen, da sich in der CO₂-Wäsche üblicherweise ein niedriger Wassergehalt einstellt.

Durch Kombination einer Shift-Konvertierung mit einer CO₂-Wäsche und einer Gasbefeuchtung ist es möglich, das CO/H₂-Verhältnis und den Gehalt an CO₂ und H₂O eines Reduktionsgases einzustellen. Eine zusätzliche Einstellmöglichkeit ist eine Bypass-Leitung der Gaskonditionierung, womit der H₂S-Gehalt beeinflußt werden kann, aber auch in einem bestimmten Bereich der Gehalt der Hauptkomponenten H₂, H₂O, CO und CO₂.

Zwar wird durch das erfindungsgemäße Verfahren auf eine Ausnützung des im Reduktionsgas, das aus der End-Reduktionsstufe austritt und abgezweigt wird, noch vorhandenen Reduktionspotentials für die weiteren Reduktionsstufen bzw. eventuell vorhandene Vorerwärmungsstufen verzichtet, jedoch ergeben sich gerade hierdurch wesentliche Vorteile:

Erfindungsgemäß wird ein hohes Reduktionspotential durch eine Erhöhung der Reduktionsgasmenge sichergestellt, wobei für den stufenweise ablaufenden Reduktionsprozeß die erhöhte Reduktionsgasmenge nur für die End-Reduktionsstufe vorgesehen ist. Hierdurch wird in der End-Reduktionsstufe, in der die Temperatur am höchsten und die Gefahr des Auftretens von "sticking" am größten ist, "sticking" zuverlässig vermieden, wobei jedoch zusätzlich vermieden wird, daß alle Anlagenteile, also alle Gasleitungen, Reaktoren, Verdichter etc., eventuell vorhandene Vorwärmstufen sowie Wirbelschicht-Reduktionsstufen, für einen Betrieb mit der erhöhten Reduktionsgasmenge auszulegen sind.

Die Erfindung ermöglicht somit den gezielten Einsatz eines hohen Reduktionspotentials und bewirkt, daß die übrigen Reduktionsstufen mit der theoretisch minimalen Reduktionsgasmenge versorgt werden können und daher entsprechend kleiner und weniger aufwendig dimensioniert sein können.

Hierdurch ergibt sich nicht nur eine optimale, nämlich - bei größtmöglicher Produktionskapazität - kleinstmögliche Auslegung aller Anlagenteile, sondern auch die Möglichkeit, für den Prozeß mit der geringstmöglichen Menge an für die Erzeugung des Reduktionsgases notwendigen Kohlenwasserstoffträgern das Auslangen zu finden, also eine Minimierung des Verbrauches von zu reformierendem Gas, wie Erdgas, trotz zuverlässigen Vermeidens der Gefahr von "sticking" zu erzielen.

Ein weiterer Vorteil des erfindungsgemäßen Verfahrens ist darin zu sehen, daß nur eine geringe Kompressionsarbeit zu leisten ist, da der Vordruck für eine Verdichtung, die nach der einzigen Gasaufbereitungsstufe vorgesehen ist, durch das niedrige Druckniveau des Topgases bestimmt wird.

Da für die letzte Reduktionsstufe ein sehr hohes Reduktionspotential zur Verfügung steht, kann die Erhitzung des der End-Reduktionsstufe entnommenen, abgezweigten und in diese Stufe rückgeführten Reduktionsgases auf eine Reduktionstemperatur im Bereich von 800 bis 900°C, beispielsweise auf eine Temperatur von etwa 850°C, vorgenommen werden.

Vorteilhaft werden Topgas und von der End-Reduktionsstufe abgezweigtes Reduktionsgas sowie reformiertes Erdgas in einer CO₂-Eliminierungsanlage von CO₂ befreit.

Zur Einstellung einer optimalen chemischen Zusammensetzung des Reduktionsgases werden ein Teil des Topgases und/oder ein Teil des abgezweigten Reduktionsgases im von CO₂ ungereinigten Zustand rezirkuliert, wobei vorzugsweise das im von CO₂ ungereinigten Zustand rezirkulierte Gas dem der End-Reduktionsstufe zugeführten Reduktionsgas vor Erhitzen desselben zugemischt wird.

Gemäß einer bevorzugten Ausführungsform erfolgt die Erhitzung und Eliminierung von CO₂ des der End-Reduktionsstufe entnommenen und abgezweigten Reduktionsgases durch Reformieren gemeinsam mit dem der Herstellung des Reduktionsgases dienenden zu reformierenden Gas und dem Topgas.

Zur Vermeidung einer Anreicherung von inerten Gasen (N₂) wird ein Teil des Topgases aus dem Rezirkulierkreis ausgeschleust, u.zw. nach einer Verdichtung des Topgases und bevor das Topgas der Gasaufbereitungsstufe zugeführt wird, wobei zwecks optimaler Energieausnutzung der ausgeschleuste Teil des Topgases zur Erhitzung des Reduktionsgases herangezogen wird, vorzugsweise durch Verbrennen.

Eine Möglichkeit zur Einstellung der Temperatur in den Wirbelschicht-Reduktionszonen liegt darin, daß der Vor-Reduktionsstufe mindestens eine Vorerwärmungsstufe für das eisenoxidhältige Material vorgeordnet ist und das aus der Vor-Reduktionsstufe austretende umgesetzte Reduktionsgas zur Vorerwärmung des eisenoxidhältigen Materials eingesetzt wird, vorzugsweise nach Abzweigung eines Teiles des umgesetzten Reduktionsgases.

Eine Anlage zur Durchführung des Verfahrens mit mindestens zwei hintereinander in Serie geschalteten Wirbelschichtreaktoren, wobei das eisenoxidhältige Material von Wirbelschichtreaktor zu Wirbelschichtreaktor über Förderleitungen in einer Richtung und das Reduktionsgas von Wirbelschichtreaktor zu Wirbelschichtreaktor über Reduktionsgas-Verbindungsleitungen in die entgegengesetzte Richtung geführt ist, und mit einer das umgesetzte Reduktionsgas vom ersten Wirbelschichtreaktor ableitenden Topgas-Ableitung, einer Zweigleitung, die von der den in Flußrichtung des eisenoxidhältigen Materials letztangeordneten Wirbelschichtreaktor mit dem vorgeordneten Wirbelschichtreaktor verbindenden Reduktionsgas-Verbindungsleitung abzweigt, sowie einer Gasaufbereitungseinrichtung zur Aufbereitung des Topgases und des über die Zweigleitung abgezweigten Reduktionsgases sowie einer Gasaufbereitungseinrichtung für frisch zugeführtes Reduktionsgas und mit einem Gaserhitzer, von dem eine das erhitzte Reduktionsgas zum letztangeordneten Wirbelschichtreaktor führende Reduktiongas-Zuleitung ausgeht, ist dadurch gekennzeichnet, daß dem in Flußrichtung des eisenoxidhältigen Materials letztangeordneten Wirbelschichtreaktor eine einzige Gasaufbereitungseinrichtung zur chemischen Konditionierung für frisches Reduktionsgas, Topgas und das abgezweigte Reduktionsgas sowie der Gaserhitzer vorgeordnet ist.

Eine bevorzugte Ausführungsform ist dadurch gekennzeichnet, daß ein Gasreformer vorgesehen ist, von dem eine frisches Reduktionsgas fördernde Gasförderleitung ausgeht, die mit der Topgas-Ableitung und der das abgezweigte Reduktionsgas ableitenden Zweigleitung leitungsmäßig verbunden ist, und daß in Gasströmungsrichtung nach dem Verknüpfungspunkt eine einzige Gaseliminierungsanlage und ein dieser nachgeordneter Gaserhitzer vorgesehen ist.

Eine weitere bevorzugte Ausführungsform ist dadurch gekennzeichnet, daß die Gasaufbereitungseinrichtung von einem Gasreformer gebildet ist, von dem die Reduktionsgas-Zuleitung ausgeht.

Vorzugsweise ist die Gasaufbereitungseinrichtung mit einer Bypassleitung für Topgas und/oder abgezweigtes Reduktionsgas überbrückbar.

Zweckmäßig zweigt von der Topgas-Ableitung eine Zweigleitung ab, die in den Gaserhitzer mündet.

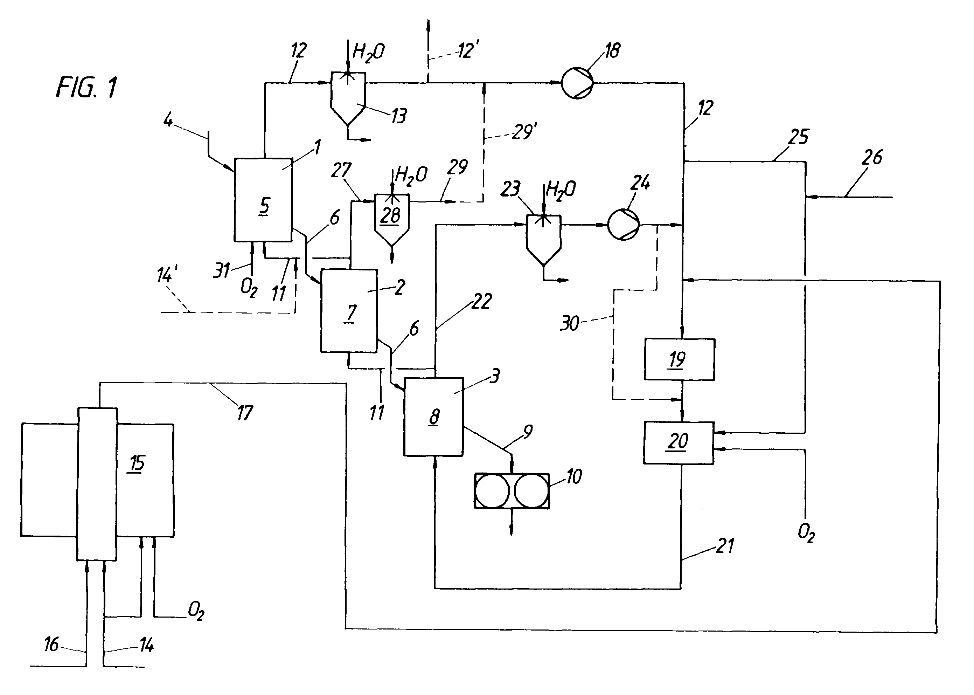

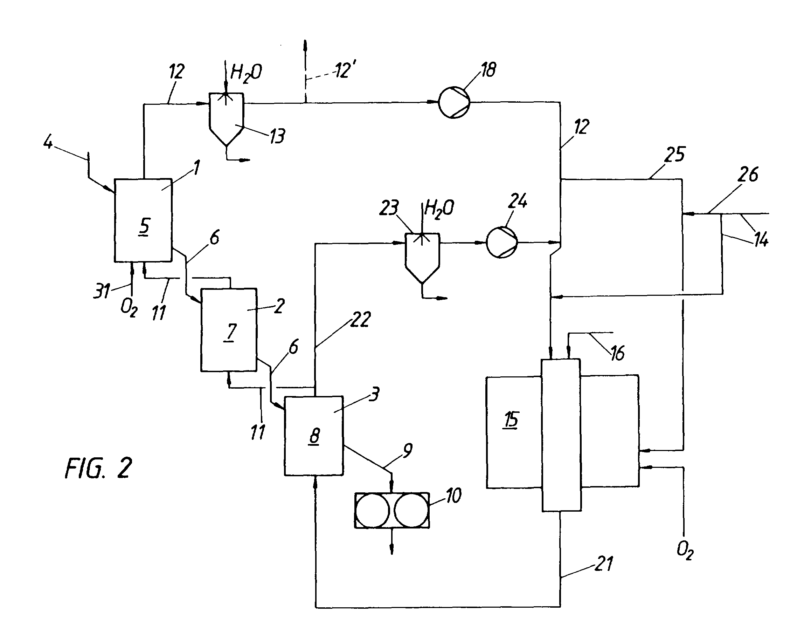

Die Erfindung ist nachfolgend anhand zweier in der Zeichnung dargestellter Ausführungsbeispiele näher erläutert, wobei die Fig. 1 und 2 jeweils eine vorteilhafte Variante des erfindungsgemäßen Verfahrens im Blockschema veranschaulichen.

Die erfindungsgemäße Anlage weist drei in Serie hintereinander geschaltete Wirbelschichtreaktoren 1 bis 3 auf, wobei eisenoxidhältiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End-Reduktion des Feinerzes zu Eisenschwamm.

Das fertig reduzierte Material, d.h. der Eisenschwamm, wird über eine Förderleitung 9 einer Brikettiereinrichtung 10 zugeführt. Reduktionsgas wird im Gegenstrom zum Erzdurchfluß von Wirbelschichtreaktor 3 zu Wirbelschichtreaktor 2 bis 1 über Verbindungsleitungen 11 geführt und als Topgas über eine Topgas-Ableitung 12 aus dem in Gasströmungsrichtung letzten Wirbelschichtreaktor 1 abgeleitet und in einem Naßwäscher 13 gekühlt und gewaschen.

Die Herstellung des Reduktionsgases erfolgt durch Reformieren von über eine Leitung 14 einem Reformer 15 zugeführtem und gegebenenfalls vorher in einer Entschwefelungsanlage entschwefeltem Erdgas. Das aus Erdgas und Dampf - zugeleitet über die Dampfleitung 16 - gebildete reformierte Gas besteht im wesentlichen aus H₂, CO, CH₄, H₂O und CO₂.

Dieses reformierte Gas wird über eine Gasförderleitung 17, die mit der Topgas-Ableitung 12 zusammenmündet, gemeinsam mit dem mittels eines Verdichters 18 verdichteten Topgas einer CO₂-Eliminierungsanlage 19 und nachfolgend einem Gaserhitzer 20 zugeleitet und von diesem über eine Reduktionsgas-Zuleitung 21 dem in Fließrichtung des Feinerzes letztangeordneten Wirbelschichtreaktor 3 zugeführt. Die CO₂-Eliminierungsanlage 19 kann z.B. als Druckwechsel-Adsorptionsanlage oder als chemischer oder physikalischer CO₂-Naßwäscher ausgebildet sein.

Von der den Wirbelschichtreaktor 3 mit dem Wirbelschichtreaktor 2 verbindenden Reduktionsgas-Verbindungsleitung 11 zweigt eine Zweigleitung 22 ab, über die ein Teil des im Wirbelschichtreaktor 3 umgesetzten Reduktionsgases abgeleitet wird. Diese Zweigleitung 22 führt über einen Wäscher 23 und einen Verdichter 24 und mündet in die Topgas-Ableitung 12, so daß das abgezweigte Reduktionsgas ebenfalls der CO₂-Reinigung und anschließenden Erhitzung unterworfen wird.

Hierdurch gelingt es, einen Teil des im Wirbelschichtreaktor 3 umgesetzten Reduktionsgases sowie das reformierte Gas und das Topgas in einer einzigen Behandlungsstufe bzw. Aufbereitungsstufe weitgehend vom CO₂ zu befreien und auf die gewünschte chemische Zusammensetzung einzustellen, so daß diese Gase - nach einer Erhitzung auf Reduktionsgastemperatur, vorzugsweise auf eine Temperatur zwischen 800°C und 900°C - als ein hohes Reduktionspotential aufweisendes Reduktionsgas zur Verfügung stehen. Hierdurch ist die End-Reduktionsstufe 8 mit einer besonders großen Menge an Reduktionsgas versorgt, so daß trotz der relativ hohen Temperatur in der End-Reduktionsstufe 8 die Gefahr des Auftretens von "sticking" infolge der großen Menge an zur Verfügung stehenden Reduktanten nicht gegeben ist.

Die Erhitzung des über die Zweigleitung 22 entnommenen Teiles des Reduktionsgases erfolgt regenerativ, rekuperativ oder durch eine Teilverbrennung dieses Gases, wobei diese Erhitzungsverfahren einzeln oder in Kombination zu zweien oder zu dritt angewendet werden können. Gemäß der in Fig. 1 dargestellten Variante wird hierzu ein Teil des Topgases dem Gaserhitzer 20 über die Leitung 25 sowie Erdgas über die Leitung 26 zugeführt und verbrannt.

Der Wirbelschichtreaktor 2, in dem die Vorreduktion des Feinerzes stattfindet, wird mit einer viel geringeren Menge an Reduktionsgas, das zudem ein geringeres Reduktionspotential aufweist, versorgt, was jedoch für die Vor-Reduktion durchaus ausreichend ist. Da hier der erreichte Reduktionsgrad des zu reduzierenden Materials niedriger ist als in der End-Reduktionsstufe 8, tritt hier kein "sticking" auf. Die Bemessung dieses Wirbelschichtreaktors 2 und dessen Gaszu- und -abführungsleitungen 11 etc. erfolgt daher entsprechend der geringeren Reduktionsgasmenge, die durch diesen Wirbelschichtreaktor 2 durchgeleitet wird. Das aus diesem Wirbelschichtreaktor 2 austretende umgesetzte Reduktionsgas wird der Vorerwärmungsstufe 5, d.h. dem Wirbelschichtreaktor 1, über die Leitung 11 zugeführt. Falls das aus dem Wirbelschichtreaktor 2 austretende Reduktionsgas nicht zur Gänze zur Vorwärmung benötigt wird, kann ein Teil desselben über die Leitung 27 einem Wäscher 28 zugeführt und über eine Gas-Ableitung 29 abgezogen und gegebenenfalls über die strichliert dargestellte Leitung 29' rezirkuliert werden.

Vorzugsweise ist die CO₂-Eliminierungsanlage mittels einer Bypass-Leitung 30 für einen Teil des rückgeführten Reduktionsgases überbrückbar, wobei die Bypass-Leitung 30 jedoch in die CO₂-Eliminierungsanlage 19 mit dem Gaserhitzer 20 verbindende Leitung mündet. Über diese Bypass-Leitung 30 kann somit Recycle-Reduktionsgas mit dem von CO₂ weitgehend gereinigten Gas gemischt werden, wobei durch eine Mengensteuerung bzw. Mengenregelung die gewünschte chemische Zusammensetzung des Mischgases, d.h. des Reduktionsgases, in einfacher Weise eingestellt werden kann.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 31 zugeführt werden, wodurch eine Teilverbrennung oder gegebenenfalls auch eine vollständige Verbrennung des der Vorerwärmungsstufe 5 zugeführten umgesetzten Reduktionsgases stattfindet. Durch Steuerung der Teilverbrennung läßt sich die Temperatur des Feinerzes bei der Vorerwärmung derart einstellen, daß die Temperaturen in den nachfolgenden Reduktionsstufen 7, 8 optimiert sind. Bei vollständiger Verbrennung wird das entstehende Rauchgas nach dem Wäscher 13 über die strichliert dargestellte Leitung 12' an die Umgebung abgegeben. Zur Steuerung der Verbrennung im Wirbelschichtreaktor 1 kann auch Erdgas in die Leitung 11 zugegeben werden (über die strichliert dargestellte Erdgas-Zuleitung 14').

Gemäß der in Fig. 2 dargestellten Ausführungsform einer erfindungsgemäßen Anlage wird sowohl das Topgas als auch das der Endreduktionsstufe 8 entnommene und abgezweigte Reduktionsgas dem Gas-Reformer 15 zugeführt - u.zw. nach Mischung mit dem zu reformierenden Erdgas -, so daß in diesem Fall der Gas-Reformer als CO₂-Eliminierungsanlage und Gaserhitzer für das Topgas und für das abgezweigte Reduktionsgas dient.

Die Eliminierung des CO₂ mit Erdgas erfolgt hierbei nach folgender Reaktionsgleichung:

CO₂ + CH₄ = 2CO + 2H₂

Ebenso erfolgt die Umsetzung des im Reduktiongas enthaltenen H₂O nach der analogen Reaktionsgleichung (Steam Reforming):

H₂O + CH₄ = CO + 3H₂

Ein Teil des Topgases wird zur Energieversorgung des Gas-Reformers verwendet und diesem über eine Leitung 25 zusammen mit Erdgas, das über die Leitung 26 zugeleitet wird, zugeführt.

Die Erfindung beschränkt sich nicht auf die in der Zeichnung dargestellten Ausführungsbeispiele, sondern kann in verschiedener Hinsicht modifiziert werden. Beispielsweise ist es möglich, die Anzahl der Wirbelschichtreaktoren je nach den Erfordernissen zu wählen.

### Beispiel A:

In einer der Fig. 1 der Zeichnung entsprechenden Anlage werden zur Erzeugung von 70 t Eisenschwamm 100 t Erz mit der in Tabelle I angegebenen Zusammensetzung eingesetzt.

Im Gas-Reformer 15 wird aus Erdgas mit der in Tabelle II angegebenen chemischen Zusammensetzung Reformgas mit der in Tabelle III angegebenen chemischen Zusammensetzung erzeugt.

**Tabelle I**

| Erz trocken | |
|---|---|
| Fe₂O₃ | 94 % |
| Fe | 66 % |
| LOI | 1 % |

**Tabelle II**

| Erdgas | |
|---|---|
| CH₄ | 94,3 % |
| CₘHₙ | 0,3 % |
| CO₂ | 0,2 % |
| N₂ | 5,2 % |
| H₂S | 10 ppm |

**Tabelle III**

| Reformgas | |
|---|---|
| H₂ | 72,0 % |
| H₂O | 1,5 % |
| CO | 11,7 % |
| CO₂ | 9,3 % |
| CH₄ | 4,0 % |
| N₂ | 1,5% |

Dieses in einer Menge von 56.000 Nm³/h anfallende Reformgas wird mit 65.100 Nm³/h über die Topgas-Ableitung 12 rückgeführtem Topgas sowie mit 87.500 Nm³/h der Endreduktionsstufe 8 entnommenen und über die Zweigleitung 22 abgezweigten Reduktionsgas vermischt. Diese Gasmischung weist die in Tabelle IV angegebene chemische Zusammensetzung auf; es wird einer CO₂-Eliminierung und nachfolgend einer Erhitzung unterzogen. Nach Austritt aus dem Gaserhitzer 20 weist es die in Tabelle V angegebene chemische Zusammensetzung auf.

**Tabelle IV**

| | |
|---|---|
| H₂ | 63,2 % |
| H₂O | 2,0 % |
| CO | 8,0 % |
| CO₂ | 5,1 % |
| CH₄ | 14,8 % |
| N₂ | 6,9 % |

**Tabelle V**

| | |
|---|---|
| H₂ | 67,7 % |
| H₂O | 0,6 % |
| CO | 8,5 % |
| CO₂ | 0,1 % |
| CH₄ | 15,9 % |
| N₂ | 7,2 % |

Das so von CO₂ gereinigte und erhitzte Reduktionsgas steht nunmehr in einer Menge von 198.000 Nm³/h mit einer Temperatur von 850°C der Endreduktionsstufe 8 zur Verfügung.

### Beispiel B:

In einer der Fig. 2 der Zeichnung entsprechenden Anlage werden zur Erzeugung von 70 t Eisenschwamm 100 t Erz mit der in Tabelle VI angegebenen Zusammensetzung eingesetzt.

Einem Reformer 15 werden insgesamt 135.750 Nm³/h Feedgas mit der in Tabelle VII angegebenen chemischen Zusammensetzung zugeführt, das aus einem Gemisch von 43.000 Nm³/h teilweise verbrauchtem Reduktionsgas aus der Endreduktionsstufe 8, 73.000 Nm³/h über die Leitung 12 rückgeführtem Topgas und 13.750Nm³/h über die Leitung 14 zugeführtem Erdgas besteht. Das Erdgas weist die in Tabelle VIII angegebene chemische Zusammensetzung auf.

Die im Reformer 15 erzeugte und der Endreduktionsstufe 8 zugeführte Reduktionsgasmenge mit der in Tabelle IX wiedergegebenen chemischen Zusammensetzung beträgt 169.000 Nm³/h. Die dem Reformer 15 zugeführte, aus Topgas und Erdgas gebildete Brenngasmenge beträgt 38.650 Nm³/h.

**Tabelle VI**

| Erz trocken | |
|---|---|
| Fe₂O₃ | 94 % |
| Fe | 66 % |
| LOI | 1 % |

**Tabelle VII**

| Feedgas | |
|---|---|
| H₂ | 38,1 % |
| H₂O | 11,4% |
| CO | 23,3 % |
| CO₂ | 10,7 % |
| CH₄ | 13,2 % |
| N₂ | 3,3 % |

**Tabelle VIII**

| Erdgas | |
|---|---|
| CH₄ | 94,3 % |
| CₘHₙ | 0,3 % |
| CO₂ | 0,2 % |
| N₂ | 5,2 % |
| H₂S | 10 ppm |

**Tabelle IX**

| Reduktionsgas | |
|---|---|
| H₂ | 52,0 % |
| H₂O | 5,2 % |
| CO | 33,5 % |
| CO₂ | 2,3 % |
| CH₄ | 4,0 % |
| N₂ | 3,0 % |

## Patentansprüche

1. Verfahren zur Direktreduktion von teilchenförmigem eisenoxidhältigem Material im Wirbelschichtverfahren, wobei das eisenoxidhältige Material mit Hilfe eines Reduktionsgases in mindestens einer Vor-Reduktionsstufe (7) vorreduziert und anschließend in einer End-Reduktionsstufe (8) zu Eisenschwamm reduziert wird, und wobei Reduktionsgas zum Teil aus frisch zugeführtem Reduktionsgas und aus bei der Direktreduktion des eisenhältigen Materials entstehendem Topgas gebildet wird und in die End-Reduktionsstufe (8) eingeleitet, dort umgesetzt, abgezogen, anschließend zu einem Teil in mindestens eine Vor-Reduktionsstufe (7) eingeleitet, dort umgesetzt, abgezogen, einer Wäsche unterworfen und anschließend als Topgas abgeleitet wird, und zum anderen Teil abgezweigt, gewaschen, von CO₂ gereinigt sowie erhitzt wird und anschließend ebenfalls als Reduktionsgas verwendet wird, dadurch gekennzeichnet, daß frisches Reduktionsgas von Synthesegas, wie reformiertem Erdgas, gebildet wird und das gesamte der End-Reduktionsstufe (8) zugeführte Reduktionsgas in einer einzigen Gasaufbereitungsstufe (19; 15) von CO₂ befreit und hinsichtlich seiner chemischen Zusammensetzung konditioniert wird sowie anschließend erhitzt wird.

2. Verfahren nach Anspruch 1, dadurch gekennzeichnet, daß in der einzigen Gasaufbereitungsstufe eine Einstellung des CO/H₂-Verhältnisses des Reduktionsgases über eine Shift-Konvertierung nach der Wasser-Gas-Shift-Reaktion erfolgt.

3. Verfahren nach Anspruch 1 oder 2, dadurch gekennzeichnet, daß in der einzigen Gasaufbereitungsstufe eine Einstellung des H₂O-Gehaltes des Reduktionsgases erfolgt, u.zw. durch einen separaten Prozeßschritt nach Durchführung der CO₂-Eliminierung.

4. Verfahren nach Anspruch 3, dadurch gekennzeichnet, daß eine Reduktionsgasbefeuchtung mit Hilfe eines Kondensators oder Quenchkühlers erfolgt.

5. Verfahren nach Anspruch 1, dadurch gekennzeichnet, daß Topgas und von der End-Reduktionsstufe abgezweigtes Reduktionsgas sowie reformiertes Erdgas in einer CO₂-Eliminierungsanlage (19) von CO₂ befreit werden (Fig. 1).

6. Verfahren nach Anspruch 5, dadurch gekennzeichnet, daß ein Teil des Topgases und/oder ein Teil des abgezweigten Reduktionsgases im von CO₂ ungereinigten Zustand rezirkuliert werden (Fig. 1).

7. Verfahren nach Anspruch 6, dadurch gekennzeichnet, daß das im von CO₂ ungereinigten Zustand rezirkulierte Gas dem der End-Reduktionsstufe (8) zugeführten Reduktionsgas vor Erhitzen desselben zugemischt wird (Fig. 1).

8. Verfahren nach Anspruch 1, dadurch gekennzeichnet, daß die Erhitzung und Eliminierung von CO₂ des der End-Reduktionsstufe (8) entnommenen und abgezweigten Reduktionsgases durch Reformieren gemeinsam mit dem der Herstellung des Reduktionsgases dienenden zu reformierenden Gas und dem Topgas erfolgt (Fig. 2).

9. Verfahren nach einem oder mehreren der Ansprüche 1 bis 8, dadurch gekennzeichnet, daß ein Teil des Topgases aus dem Rezirkulierkreis ausgeschleust wird, u.zw. nach einer Verdichtung des Topgases und bevor das Topgas der Gasaufbereitungsstufe zugeführt wird.

10. Verfahren nach Anspruch 9, dadurch gekennzeichnet, daß der ausgeschleuste Teil des Topgases zur Erhitzung des Reduktionsgases herangezogen wird, vorzugsweise durch Verbrennen.

11. Anlage zur Durchführung des Verfahrens nach einem oder mehreren der Ansprüche 1 bis 10, mit mindestens zwei hintereinander in Serie geschalteten Wirbelschichtreaktoren (1, 2, 3), wobei das eisenoxidhältige Material von Wirbelschichtreaktor (1) zu Wirbelschichtreaktor (2, 3) über Förderleitungen (6) in einer Richtung und das Reduktionsgas von Wirbelschichtreaktor (3) zu Wirbelschichtreaktor (2, 1) über Reduktionsgas-Verbindungsleitungen (11) in die entgegengesetzte Richtung geführt ist, und mit einer das umgesetzte Reduktionsgas vom ersten Wirbelschichtreaktor ableitenden Topgas-Ableitung (12), einer Zweigleitung (22), die von der den in Flußrichtung des eisenoxidhältigen Materials letztangeordneten Wirbelschichtreaktor (3) mit dem vorgeordneten Wirbelschichtreaktor (2) verbindenden Reduktionsgas-Verbindungsleitung (11) abzweigt, sowie einer Gasaufbereitungseinrichtung zur Aufbereitung des Topgases und des über die Zweigleitung (22) abgezweigten Reduktionsgases sowie einer Gasaufbereitungseinrichtung für frisch zugeführtes Reduktionsgas und mit einem Gaserhitzer (20), von dem eine das erhitzte Reduktionsgas zum letztangeordneten Wirbelschichtreaktor (3) führende Reduktiongas-Zuleitung ausgeht, dadurch gekennzeichnet, daß dem in Flußrichtung des eisenoxidhältigen Materials letztangeordneten Wirbelschichtreaktor eine einzige Gasaufbereitungseinrichtung (15, 19) zur chemischen Konditionierung für frisches Reduktionsgas, Topgas und das abgezweigte Reduktionsgas sowie der Gaserhitzer (20) vorgeordnet ist.

12. Anlage nach Anspruch 11, dadurch gekennzeichnet, daß ein Gasreformer vorgesehen ist, von dem eine frisches Reduktionsgas fördernde Gasförderleitung (17) ausgeht, die mit der Topgas-Ableitung und der das abgezweigte Reduktionsgas ableitenden Zweigleitung (22) leitungsmäßig verbunden ist, und daß in Gasströmungsrichtung nach dem Verknüpfungspunkt eine einzige Gaseliminierungsanlage (19) und ein dieser nachgeordneter Gaserhitzer (20) vorgesehen ist (Fig. 1).

13. Anlage nach Anspruch 11, dadurch gekennzeichnet, daß die Gasaufbereitungseinrichtung von einem Gasreformer (15) gebildet ist, von dem die Reduktionsgas-Zuleitung ausgeht (Fig. 2).

14. Anlage nach einem oder mehreren der Ansprüche 11 bis 13, dadurch gekennzeichnet, daß die Gasaufbereitungseinrichtung (15, 19) mit einer Bypassleitung (30) für Topgas und/oder abgezweigtes Reduktionsgas überbrückbar ist.

15. Anlage nach einem oder mehreren der Ansprüche 11 bis 14, dadurch gekennzeichnet, daß von der Topgas-Ableitung (12) eine Zweigleitung (25) abzweigt, die in den Gaserhitzer (20) mündet.

## Claims

1. A process for the direct reduction of particulate iron-oxide-containing material by fluidization, wherein the iron-oxide-containing material is prereduced by means of a reducing gas in at least one prereduction stage (7) and subsequently is reduced to sponge iron in a final reduction stage (8), and wherein reducing gas is partly produced from freshly supplied reducing gas and from top gas forming during the direct reduction of the iron-containing material and is fed to the final reduction stage (8), reacted there, withdrawn, one portion subsequently is supplied to at least one prereduction stage (7), is reacted there, withdrawn, subjected to scrubbing and then discharged as a top gas, and the other portion is branched off, scrubbed, purified from CO₂ and heated, and subsequently is likewise utilized as a reducing gas, characterized in that fresh reducing gas is formed of synthesis gas, such as reformed natural gas, and the total of the reducing gas supplied to the final reduction stage (8) is freed from CO₂ and conditioned with respect to its chemical composition in a single gas preparation stage (19; 15) and subsequently is heated.

2. A process according to claim 1, characterized in that in the single gas preparation stage an adjustment of the CO/H₂ ratio of the reducing gas is effected by shift conversion according to the water-gas shift reaction.

3. A process according to claim 1 or 2, characterized in that in the single gas preparation stage an adjustment of the H₂O content of the reducing gas is effected, namely by a separate process step that is carried out after CO₂ elimination.

4. A process according to claim 3, characterized in that a moistening of the reducing gas is effected by means of a condenser or quench cooler.

5. A process according to claim 1, characterized in that top gas and reducing gas that has been branched off from the final reduction stage as well as reformed natural gas are freed from CO₂ in a CO₂ elimination plant (19) (Fig. 1).

6. A process according to claim 5, characterized in that a portion of the top gas and/or a portion of the branched-off reducing gas are recycled unpurified from CO₂ (Fig. 1).

7. A process according to claim 6, characterized in that the gas that is recycled unpurified from CO₂ is admixed to the reducing gas fed to the final reduction stage (8) before the latter is heated (Fig. 1).

8. A process according to claim 1, characterized in that the reducing gas withdrawn and branched off from the final reduction stage (8) is subjected to heating and CO₂ elimination by being subjected to a reforming operation together with the gas that is to be reformed and serves for producing the reducing gas, and the top gas (Fig. 2).

9. A process according to one or several of claims 1 to 8, characterized in that a portion of the top gas is sluiced out of the recirculating system, namely after compression of the top gas has been effected and before the top gas is fed to the gas preparation stage.

10. A process according to claim 9, characterized in that the sluiced-out portion of the top gas is utilized for heating the reducing gas, preferably by combustion.

11. A plant for carrying out the process according to one or several of claims 1 to 10, comprising at least two fluidized-bed reactors (1, 2, 3) subsequently connected in series, wherein the iron-oxide-containing material is conducted from fluidized-bed reactor (1) to fluidized-bed reactor (2, 3) via conveying ducts (6) in one direction and the reducing gas is conducted from fluidized-bed reactor (3) to fluidized-bed reactor (2, 1) via reducing-gas connection ducts (11) in the opposite direction, and comprising a top-gas discharge duct (12) discharging the reacted reducing gas from the first fluidized-bed reactor, a branch duct (22) that branches off from the reducing-gas connection duct (11) connecting the fluidized-bed reactor (3) arranged last if viewed in the direction of flow of the iron-oxide-containing material with the fluidized-bed reactor (2) arranged to precede it, and a gas preparation means for preparing the top gas and the reducing gas branched off via the branch duct (22) as well as a gas preparation means for freshly supplied reducing gas, and comprising a gas heater (20) from which a reducing-gas feed duct conducting the heated reducing gas to the fluidized-bed reactor (3) arranged last departs, characterized in that the fluidized-bed reactor arranged last if viewed in the direction of flow of the iron-oxide-containing material is preceded by a single gas preparation means (15, 19) for chemically conditioning fresh reducing gas, top gas and the branched-off reducing gas as well as by the gas heater (20).

12. A plant according to claim 11, characterized in that a gas reformer is provided, from which a gas-conveying duct (17) conveying fresh reducing gas departs that is flow-connected with the top-gas discharge duct and with the branch duct (22) discharging the branched-off reducing gas, and that, viewed in the gas flow direction, at a position after the connection site a single gas elimination plant (19) and a gas heater (20) arranged subsequently to the same are provided (Fig. 1).

13. A plant according to claim 11, characterized in that the gas preparation means is formed by a gas reformer (15) from which the reducing-gas feed duct departs (Fig. 2).

14. A plant according to one or several of claims 11 to 13, characterized in that the gas preparation means (15, 19) can be bypassed by means of a bypass duct (30) for top gas and/or branched-off reducing gas.

15. A plant according to one or several of claims 11 to 14, characterized in that from the top-gas discharge duct (12) a branch duct (25) departs and opens into the gas heater (20).

## Revendications

1. Procédé de réduction directe d'un matériau particulaire contenant de l'oxyde de fer dans le procédé en lit fluidisé, où le matériau contenant de l'oxyde de fer est préréduit à l'aide d'un gaz réducteur dans au moins une étape de préréduction (7) puis est réduit en éponge de fer dans une étape de réduction finale (8), et où le gaz réducteur est formé en partie par du gaz réducteur fraîchement introduit et par du gaz de haut fourneau formé lors de la réduction directe du matériau contenant de l'oxyde de fer et est introduit dans l'étape de réduction finale (8), y est converti, en est retiré puis en partie introduit dans au moins une étape de préréduction (7), y est converti, en est retiré, est soumis à un lavage puis est évacué sous forme de gaz de haut fourneau, et en partie séparé par une dérivation, lavé, débarrassé du CO₂ et chauffé puis utilisé de même comme gaz réducteur, caractérisé en ce que le gaz réducteur frais est formé par du gaz de synthèse, comme du gaz naturel reformé, et la totalité du gaz réducteur introduit dans l'étape de réduction finale (8) est débarrassée du CO₂ et conditionné concernant sa composition chimique puis chauffé dans une unique étape de traitement de gaz (19 ; 15).

2. Procédé selon la revendication 1 caractérisé en ce qu'un réglage du rapport CO/H₂ du gaz réducteur a lieu par le biais d'une conversion déplacée selon la réaction de conversion déplacée du gaz à l'eau dans l'unique étape de traitement de gaz.

3. Procédé selon la revendication 1 ou 2 caractérisé en ce qu'un réglage de la teneur en H₂O du gaz réducteur a lieu dans l'unique étape de traitement de gaz, et ce par une étape de procédé séparée après la mise en oeuvre de l'élimination du CO₂.

4. Procédé selon la revendication 3 caractérisé en ce qu'une humidification du gaz réducteur a lieu au moyen d'un condenseur ou d'un refroidisseur à injection.

5. Procédé selon la revendication 1 caractérisé en ce que le gaz de haut fourneau et le gaz réducteur retiré par une dérivation de l'étape de réduction finale ainsi que le gaz naturel reformé sont débarrassés du CO₂ dans une installation d'élimination du CO₂ (19) (fig. 1).

6. Procédé selon la revendication 5 caractérisé en ce qu'une partie du gaz de haut fourneau et/ou une partie du gaz réducteur retiré par une dérivation sont recyclés à l'état non débarrassé du CO₂ (fig. 1).

7. Procédé selon la revendication 6 caractérisé en ce que le gaz recyclé à l'état non débarrassé du CO₂ est mélangé au gaz réducteur introduit dans l'étape de réduction finale (8) avant son chauffage (fig. 1).

8. Procédé selon la revendication 1 caractérisé en ce que le chauffage et l'élimination du CO₂ du gaz réducteur retiré de l'étape de réduction finale (8) et séparé par une dérivation ont lieu par reformage conjointement avec le gaz à reformer servant à la production du gaz réducteur et le gaz de haut fourneau (fig. 2).

9. Procédé selon une ou plusieurs des revendications 1 à 8 caractérisé en ce qu'une partie du gaz de haut fourneau est retirée par éclusage du circuit de recyclage, et ce après une compression du gaz de haut fourneau et avant que le gaz de haut fourneau soit introduit dans l'étape de traitement de gaz.

10. Procédé selon la revendication 9 caractérisé en ce que la partie retirée par éclusage du gaz de haut fourneau est utilisée pour le chauffage du gaz réducteur, de préférence par combustion.

11. Installation pour la mise en oeuvre du procédé selon une ou plusieurs des revendications 1 à 10 avec au moins deux réacteurs en lit fluidisé (1,2,3) branchés l'un derrière l'autre en série, où le matériau contenant de l'oxyde de fer est conduit du réacteur en lit fluidisé (1) au réacteur en lit fluidisé (2, 3) par le biais de conduites de transport (6) dans un sens et le gaz réducteur est conduit du réacteur en lit fluidisé (3) au réacteur en lit fluidisé (2, 1) par le biais de conduites de liaison pour le gaz réducteur (11) dans le sens opposé, et avec une conduite d'évacuation de gaz de haut fourneau (12) évacuant du premier réacteur en lit fluidisé le gaz réducteur converti, une conduite de dérivation (22) qui forme une ramification de la conduite de liaison pour le gaz réducteur (11) reliant le réacteur en lit fluidisé (3) disposé en dernier dans le sens d'écoulement du matériau contenant de l'oxyde de fer au réacteur en lit fluidisé (2) disposé en amont, ainsi qu'un dispositif de traitement de gaz pour traiter le gaz de haut fourneau et le gaz réducteur séparé par une dérivation par la conduite de dérivation (22) ainsi qu'un dispositif de traitement de gaz pour le gaz réducteur fraîchement introduit et avec un réchauffeur de gaz (20) duquel part une conduite d'introduction de gaz réducteur conduisant le gaz réducteur chauffé au réacteur en lit fluidisé (3) disposé en dernier, caractérisée en ce qu'un unique dispositif de traitement de gaz (15, 19) pour le conditionnement chimique du gaz réducteur frais, du gaz de haut fourneau et du gaz réducteur séparé par une dérivation ainsi que le réchauffeur de gaz (20) sont situés en amont du réacteur en lit fluidisé situé en dernier dans le sens d'écoulement du matériau contenant de l'oxyde de fer.

12. Installation selon la revendication 11 caractérisée en ce qu'il est prévu un reformeur de gaz duquel part une conduite de transport de gaz (17) transportant le gaz réducteur frais, qui est reliée par des conduites à la conduite d'évacuation de gaz de haut fourneau et à la conduite de dérivation (22) retirant le gaz réducteur séparé par une dérivation, et en ce qu'il est prévu dans le sens d'écoulement du gaz après le point de jonction une unique installation d'élimination de gaz (19) et un réchauffeur de gaz (20) disposé en aval de celle-ci (fig. 1).

13. Installation selon la revendication 11 caractérisée en ce que le dispositif de traitement de gaz est formé par un reformeur de gaz (15) duquel part la conduite d'introduction de gaz réducteur (fig. 2).

14. Installation selon une ou plusieurs des revendications 11 à 13 caractérisée en ce que le dispositif de traitement de gaz (15,19) peut être court-circuité par une conduite de dérivation (30) pour le gaz de haut fourneau et/ou le gaz réducteur séparé par une dérivation.

15. Installation selon une ou plusieurs des revendications 11 à 14 caractérisée en ce qu'une conduite dérivée (25) qui débouche dans le réchauffeur de gaz (20) forme une ramification de la conduite d'évacuation de gaz de haut fourneau (12).
